# FASCICULE DE BREVET EUROPEEN

(11) **EP 3 191 700 B1**
(45) Date de publication et mention de la délivrance du brevet: **13.03.2019**
(21) Numéro de dépôt: 14783663.9
(22) Date de dépôt: 12.09.2014
(51) Int. Cl.: F02D 13/06, F02D 41/00, F02D 13/02

(54) **MOTEUR A COMBUSTION DE VEHICULE AUTOMOBILE A DESACTIVATION DE CYLINDRE AMELIOREE**
VERBRENNUNGSMOTOR EINES KRAFTFAHRZEUGS MIT VERBESSERTER ZYLINDERABSCHALTUNG
MOTOR VEHICLE COMBUSTION ENGINE WITH IMPROVED CYLINDER DEACTIVATION

(43) Date de publication de la demande: 19.07.2017
(73) Titulaire: PSA Automobiles SA, 78300 Poissy (FR)
(72) Inventeur: VEIGA PAGLIARI, Diego Rafael, F-75012 Paris (FR)
(74) Mandataire: Bourguignon, Eric Pascal Jean
(86) Numéro de dépôt international: PCT/FR2014/052273
(87) Numéro de publication internationale: WO 2016/038255

(56) Documents cités:
- EP-A1- 1 612 393
- EP-A2- 2 339 150
- WO-A2-2013/150213
- US-A- 4 499 870
- US-A1- 2005 131 618
- US-A1- 2008 185 194
- US-A1- 2012 055 444
- US-A1- 2012 312 263
- US-B1- 6 431 154

## Description

L'invention concerne la désactivation de cylindre(s) dans les moteurs à combustion de véhicules automobiles.

Dans ce type de moteur, il s'agit de désactiver la distribution, c'est-à-dire une ou plusieurs soupapes sur un cylindre ou plusieurs et de ce fait, pour produire la même puissance, il faut demander davantage de puissance aux autres cylindres restés actifs. Les cylindres restés actifs fonctionnent sur un point de fonctionnement avec un rendement meilleur, permettant au moteur de moins consommer.

Les systèmes actuels reposent sur la désactivation d'un même cylindre de manière répétitive. S'ils sont relativement satisfaisants pour un moteur à quatre cylindres, par contre, pour un moteur à trois cylindres par exemple, la désactivation d'un même cylindre sur plusieurs cycles est source de vibrations très importantes. Afin de réduire ces vibrations, il faut réaliser ce que l'on nomme une désactivation tournante. Autrement dit, c'est alternativement chaque cylindre qui est désactivé. Les documents US20120055444A1 et WO2013150213A1 décrivent deux systèmes connus du type à désactivation tournante.

Un cylindre donné est donc le siège de cycles alternativement actifs et inactifs et il faut donc mettre en oeuvre une séquence d'ouvertures et fermetures des soupapes du cylindre considéré qui soit telle que l'on minimise les pertes par pompage lors du cycle inactif, tout en assurant une reprise du cycle actif suffisamment performante.

Le but de l'invention est de proposer une séquence d'ouvertures et fermetures des soupapes d'un cylindre devant être désactivé laquelle séquence présente de tels avantages.

Ce but est atteint selon l'invention grâce à un moteur à combustion de véhicule automobile comprenant un jeu de cylindres formant chambres de combustion en désactivation tournante et un jeu de soupapes associées respectivement à ces cylindres, le moteur comportant un dispositif de modification de comportement des soupapes, le dispositif de modification de comportement des soupapes étant configuré pour commander pour au moins un cylindre deux cycles respectivement activé et désactivé du cylindre, lesquels cycles comportent chacun une phase initiale laquelle consiste en une réduction de volume de la chambre laquelle phase initiale met en oeuvre dans le cas du cycle désactivé un échappement effectif de gaz hors du cylindre par au moins une soupape d'échappement, lesquels cycles activé et désactivé comportent après la phase initiale de réduction de volume une suite de trois phases consistant successivement en une phase d'expansion de volume de la chambre de combustion, une seconde phase de réduction de volume de la chambre puis une seconde phase d'expansion de volume de la chambre, caractérisé en ce qu'en cycle désactivé au moins une soupape d'échappement du cylindre reste ouverte au-delà de la fin de la phase initiale de réduction de volume de la chambre et pendant une partie de la phase d'expansion consécutive de sorte que ladite phase d'expansion consécutive produit une aspiration de gaz d'échappement dans le cylindre par la soupape d'échappement.

Avantageusement, le dispositif de modification de comportement des soupapes est configuré de sorte que la phase d'expansion consécutive à la phase initiale de réduction de volume est réalisée avec au moins une soupape d'admission ouverte pendant au moins une partie de la phase d'expansion en cycle activé et la phase d'expansion consécutive à la phase initiale de réduction de volume est réalisée avec toutes les soupapes d'admission du cylindre maintenues fermées pendant l'ensemble de la phase d'expansion en cycle désactivé.

Avantageusement, le dispositif de modification de comportement des soupapes est configuré de sorte que ladite seconde phase de réduction de volume en cycle désactivé est une phase de réduction de volume qui comprime les gaz d'échappement ré-aspirés.

Avantageusement, le comportement de l'ensemble des soupapes d'échappement du cylindre est identique pour un cycle activé et un cycle désactivé.

Avantageusement, en cycle activé toutes les soupapes d'échappement sont fermées pendant la phase initiale de réduction de volume du cylindre.

Avantageusement, la phase initiale de réduction de volume met en oeuvre dans le cas du cycle activé un échappement effectif de gaz hors du cylindre par au moins une soupape d'échappement et le dispositif de modification de comportement de soupapes est configuré pour qu'au moins une soupape d'échappement dudit au moins un cylindre présente une cinétique différente pendant la phase initiale de réduction de volume selon que le cylindre est en cycle activé ou en cycle désactivé.

Avantageusement, le dispositif de modification de comportement de soupapes est configuré de telle sorte que dans la phase initiale de réduction de volume une ouverture globale considérée sur l'ensemble des soupapes d'échappement du cylindre est plus faible en cycle activé qu'en cycle désactivé.

Avantageusement, le dispositif de modification de comportement de soupapes est configuré de telle sorte que dans la phase initiale de réduction de volume une soupape d'échappement du cylindre présente une course d'ouverture qui est plus faible en cycle activé qu'en cycle désactivé.

Avantageusement, ledit au moins un cylindre comporte au moins deux soupapes d'échappement, le dispositif de modification de comportement de soupapes est configuré pour placer les dites au moins deux soupapes d'échappement en position ouverte pendant au moins une partie de la phase initiale de réduction de volume en cycle désactivé et maintenir au moins une soupape fermée parmi lesdites au moins deux soupapes pendant la phase initiale de réduction de volume en cycle activé.

Avantageusement, le dispositif de modification de comportement de soupapes est configuré pour actionner en ouverture ladite au moins une soupape d'échappement en début de phase initiale de réduction de volume dans le cas du cycle désactivé et pour maintenir cette soupape d'échappement ouverte pendant les phases successives d'expansion, de réduction et d'expansion de volume du cycle désactivé.

Avantageusement, le dispositif de modification de comportement de soupapes est configuré de telle sorte que ledit au moins un cylindre effectue alternativement un cycle activé et un cycle désactivé.

De préférence, le moteur selon l'invention comporte trois cylindres seulement.

D'autres caractéristiques, buts et avantages de l'invention apparaitront à la lecture de la description qui va suivre, faite en référence aux figures annexées sur lesquelles :
- la figure 1 représente une suite de cycles actifs et inactifs selon un premier mode de réalisation de l'invention ;
- la figure 2 représente cette même suite de cycles sous la forme d'un diagramme pression-volume ;
- la figure 3 représente une suite de cycles actifs et inactifs selon un deuxième mode de réalisation de l'invention ;
- la figure 4 représente cette suite de cycles selon ce deuxième mode de réalisation de l'invention sous la forme d'un diagramme pression-volume ;
- la figure 5 représente une suite de cycles actifs et inactifs selon un troisième mode de réalisation de l'invention ;
- la figure 6 représente cette même suite de cycles sous la forme d'un diagramme pression-volume ;
- la figure 7 représente une suite de cycles actifs et inactifs selon un quatrième mode de réalisation de l'invention ;
- la figure 8 représente cette même suite de cycles sous la forme d'un diagramme pression-volume ;
- la figure 9 représente une suite de cycles actifs et inactifs selon un cinquième mode de réalisation de l'invention ;
- la figure 10 représente cette même suite de cycles sous la forme d'un diagramme pression-volume ;
- la figure 11 représente une suite de cycles pour un moteur à trois cylindres fonctionnant de façon conventionnelle (art antérieur) ;
- la figure 12 représente une suite de cycles pour un moteur à trois cylindres fonctionnant selon l'invention avec désactivation tournante des cylindres.

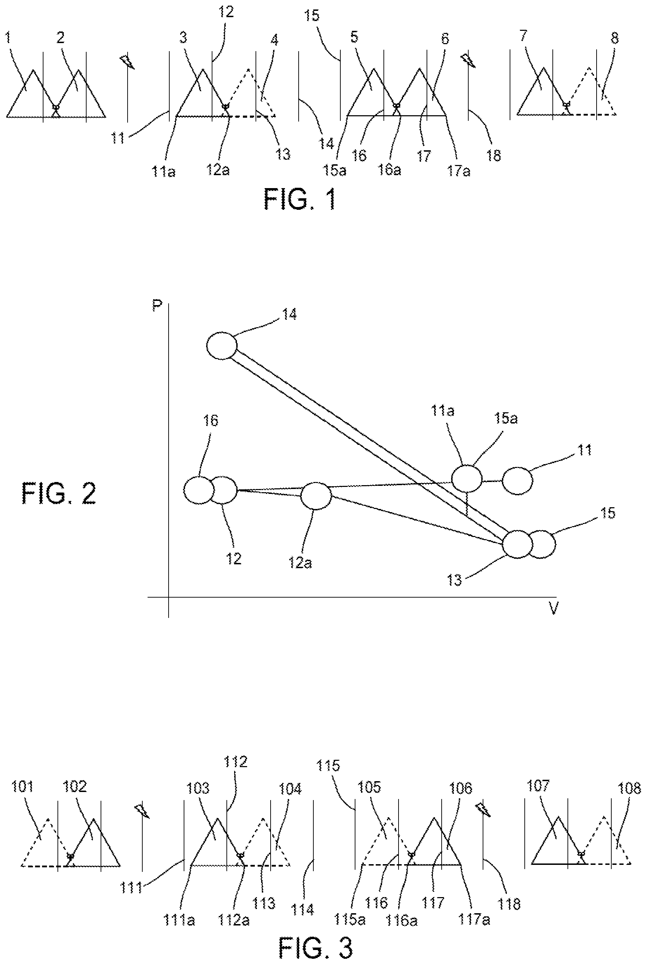

On a représenté sur la figure 1 une suite de cycles alternativement actifs et inactifs d'un même cylindre. Sur la figure 1, un triangle en trait plein représente une ouverture effective de soupape, tandis qu'un triangle en trait pointillé représente une soupape désactivée, ici maintenue en position fermée.

Les triangles 1, 3, 5 et 7 illustrent les mouvements d'ouverture des soupapes d'échappement du cylindre, tandis que les triangles 2, 4, 6 et 8 représentent les mouvements d'ouverture des soupapes d'admission du cylindre. Les traits verticaux représentent les points morts alternativement haut et bas du cylindre.

Dans la présente description, un cycle sera considéré comme débutant au point mort bas du cylindre au début du mouvement de réduction de volume du cylindre lequel mouvement est dédié à l'échappement dans un cycle normal. Un cycle sera donc constitué d'un mouvement de réduction de volume suivi d'un mouvement d'expansion correspondant à la phase d'admission puis d'un nouveau cycle de réduction de volume correspondant normalement à la compression puis un nouveau cycle d'expansion correspondant normalement à la détente.

On décrira, en référence à la figure 1 et à la figure 2, d'abord un cycle désactivé puis un cycle actif du présent mode de réalisation. Un cycle inactif est un cycle où aucune combustion n'a lieu dans la chambre tandis qu'un cycle actif est le siège d'une telle combustion.

Le cycle inactif débute au point mort bas représenté sous la référence 11, lequel point mort bas 11 se produit après la combustion du cycle actif précédent, dont le déclenchement de la combustion est symbolisé par un éclair. A ce moment l'ensemble des soupapes du cylindre est fermé, jusqu'à un point 11a correspondant au début de l'ouverture 3 de la soupape d'échappement. Entre le point 11 et le point 11a, une première phase de compression est donc ici réalisée avant que la soupape d'échappement ne soit ouverte. Au point 11a, la soupape d'échappement est ouverte et la pression dans le cylindre dévient égale à la pression dans la conduite d'échappement. Le cylindre atteint alors sont point mort haut sous la référence 12. Entre le point 11a et le point 12, les gaz d'échappement initialement contenus dans le cylindre sont donc expulsés dans la conduite d'échappement.

Le point 12a correspond à l'instant de fermeture de la soupape d'échappement. Le point 12a est ici plus tardif que le point mort haut 12, de sorte qu'entre le point 12 et le point 12a, le cylindre est le siège d'un début de mouvement d'expansion. Une portion des gaz d'échappement est alors ré-aspirée dans le cylindre, puis piégée dans le cylindre au moment illustré par le point 12a où la soupape d'échappement est actionnée en fermeture pour marquer la fin du triangle 3. La soupape d'admission est, dans le présent cycle inactif, maintenue fermée selon le triangle en pointillé 4 de sorte que les gaz d'échappement sont maintenus en enceinte close à partir du point 12a. Entre le point 12a et le point 13 où le cylindre atteint son point mort bas, les gaz d'échappement subissent une expansion. On s'assure par la ré-aspiration des gaz d'échappement que l'on piège suffisamment de gaz brulés pour ne pas atteindre une pression trop basse au point mort bas 13. A ce titre une pression d'au moins 0,15 bars est avantageuse. Grâce à une telle ré-aspiration des gaz brulés, on évite une production de vide dans le cylindre à partir de la position centrale du piston et jusqu'au point mort bas. La production de vide amènerait le cylindre à ré-aspirer de l'huile provenant du circuit d'huile du moteur car la pression dans la chambre de combustion serait beaucoup plus faible que la pression dans le circuit d'huile et ce phénomène entrainerait une forte augmentation de la consommation d'huile.

De plus, si de l'huile apparaissait dans la chambre de combustion, la réactivation du cylindre après le cycle désactivé serait le siège d'un comportement dégradé en combustion. En effet il apparaitrait un phénomène d'encrassement sur les ouvertures d'admission et d'échappement conduisant à une réduction de la perméabilité du moteur et donc à une réduction de puissance. L'apparition d'huile augmenterait en outre une tendance à l'apparition de cliquetis, due à la présence de fines gouttes d'huile agissant comme des points à haute température dans la chambre de combustion pendant la phase de combustion.

Le fait de ré-aspirer seulement une portion des gaz brulés permet de ne pas re-compresser une forte quantité de gaz brulés, qui sont très chauds et à très haute pression, ce qui signifierait qu'au point mort haut après re-compression, on obtiendrait dans la chambre de combustion une pression et une température à des niveaux plus élevés que les niveaux obtenus lors d'un cycle normal, ce qui pourrait provoquer une casse du moteur. De plus le moteur dépenserait beaucoup d'énergie pour re-compresser les gaz, provoquant une forte pénalité de rendement pendant le cycle désactivé. On perdrait ainsi l'intérêt de la désactivation de cylindre.

Grâce à une telle ré-aspiration de gaz brulés, on évite en outre un piégeage d'air frais dans le cylindre pendant le cycle désactivé. Si l'on maintient de l'air frais dans le cylindre pendant l'ensemble du cycle désactivé, et qu'ensuite l'on souhaite utiliser cet air frais pour réactiver le cylindre, le cylindre sera en manque de turbulences pour avoir un bon comportement en combustion et il s'en suivrait une combustion dégradée et une mauvaise efficacité du moteur.

Pour éviter d'utiliser le même air, on pourrait imaginer expulser cet air frais par l'ouverture d'échappement puis mettre en oeuvre une nouvelle phase d'admission après la désactivation. Néanmoins on perdrait alors l'intérêt de la désactivation de cylindre car le principe de la désactivation est de réduire les pertes par pompage en réduisant les pertes par pompage à l'admission. De plus en envoyant de l'air frais à l'échappement, on ne maintient plus le ratio stoechiométrique de carburant à l'air dans le convertisseur catalytique, ce qui signifie une forte réaction exothermique dans le convertisseur catalytique entrainant un endommagement du convertisseur. De plus, le fait de s'écarter du ratio stoechiométrique engendre en soi la dégradation de la fonction de post-traitement.

La fin du cycle désactivé consiste en une re-compression des gaz brulés jusqu'à atteindre le point mort haut 14, puis une ré-expansion du volume de la chambre jusqu'à atteindre le point mort bas 15. Le cycle activé commence alors.

Le cycle activé se déroule de la même façon que le cycle désactivé, mais en mettant en oeuvre une ouverture de la soupape d'admission, référencée 6. Plus spécifiquement, le cycle activé débute par une ouverture de la soupape d'échappement référencée 5 laquelle débute au point 15a après une première mise en pression à soupapes fermées. A l'ouverture 15a de la soupape d'échappement la pression dans la chambre augmente à la valeur de la pression dans la conduite d'échappement. Au point 16, le cylindre atteint son point mort haut, alors que la soupape d'échappement reste encore ouverte pendant le début de la phase d'expansion consécutive, de sorte qu'une partie des gaz brulés est ré-aspirée dans le cylindre, jusqu'à un point 16a où la soupape d'échappement est actionnée en fermeture et la soupape d'admission est actionnée en ouverture, avec un croisement de soupapes choisi. Le point 17 correspond au point mort bas du cylindre, et le point 17a, ultérieur au point 17, à la fermeture de la soupape d'admission. Le point 18 correspond à la commande de combustion, initiée au point mort haut. Le cycle activé se termine par une phase de détente avant le début du cycle suivant, ici un cycle désactivé à nouveau.

Cette stratégie est particulièrement adaptée lorsque le moteur accepte un tel réglage avec un fort retard à la fermeture de la soupape d'échappement. Elle présente un bénéfice tout particulier pour un retard à la fermeture de la soupape d'échappement qui soit supérieur à 25 degrés du vilebrequin. Elle génère toutefois une certaine perte par pompage entre les points 15, 15a et 16. La présente stratégie peut être combinée avec la mise en oeuvre d'une variation du croisement de soupapes en fonction de la charge du moteur, notamment avec une stratégie dans laquelle le retard à la fermeture de la soupape d'échappement est d'autant plus faible que la charge du moteur est élevée.

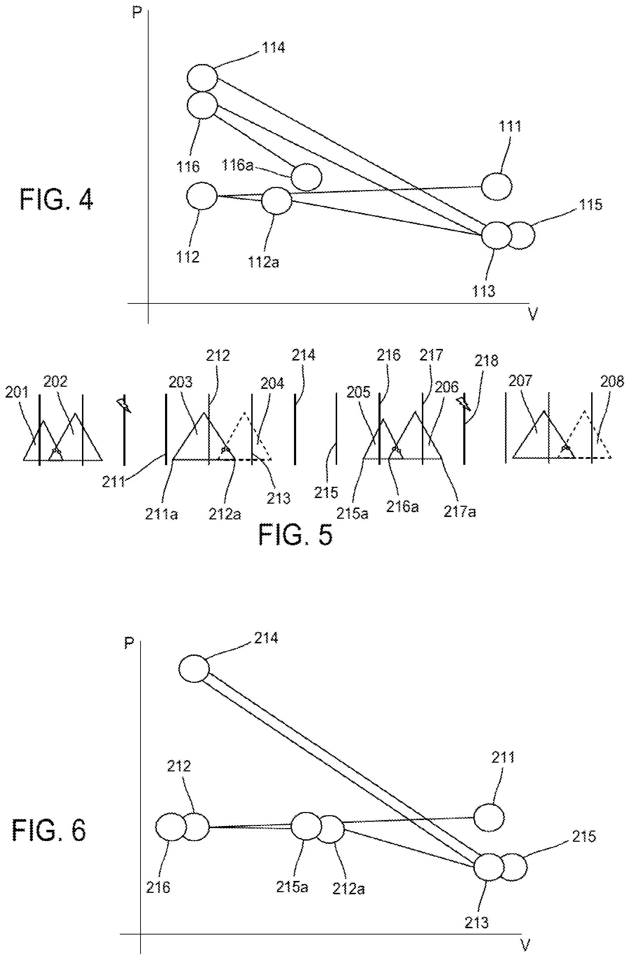

On a représenté sur les figures 3 et 4 un deuxième mode de réalisation de l'invention. Sur la figure 3, le cycle inactif débute au point mort bas représenté sous la référence 111, lequel point mort bas 111 se produit après la combustion du cycle actif précédent, dont le déclenchement de la combustion est symbolisé par un éclair. A ce moment l'ensemble des soupapes du cylindre est fermé, jusqu'à un point 111a correspondant au début de l'ouverture 103 de la soupape d'échappement. Entre le point 111 et le point 111a, une première phase de compression est donc ici réalisée avant que la soupape d'échappement ne soit ouverte. Au point 111a, la soupape d'échappement est ouverte et la pression dans le cylindre dévient égale à la valeur de la pression dans la conduite d'échappement.

Le cylindre atteint alors sont point mort haut sous la référence 112. Entre le point 111a et le point 112, les gaz d'échappement initialement contenus dans le cylindre sont donc expulsés dans la conduite d'échappement.

Le point 112a correspond à l'instant de fermeture de la soupape d'échappement. Le point 112a est ici plus tardif que le point mort haut 112, de sorte qu'entre le point 112 et le point 112a, le cylindre est le siège d'un début de mouvement d'expansion. Une portion des gaz d'échappement est alors ré-aspirée dans le cylindre, puis piégée dans le cylindre au moment illustré par le point 112a où la soupape d'échappement est actionnée en fermeture pour marquer la fin du triangle 103. La soupape d'admission est, dans le présent cycle désactivé, maintenue fermée selon le triangle en pointillé 104 de sorte que les gaz d'échappement sont maintenus en enceinte close à partir du point 112a. Entre le point 112a et le point 113 où le cylindre atteint son point mort bas, les gaz d'échappement subissent une expansion. On s'assure par la ré-aspiration des gaz d'échappement que l'on piège suffisamment de gaz brulés pour ne pas atteindre une pression trop basse au point mort bas 113. A ce titre une pression d'au moins 0,15 bars est avantageuse. Le fait de ré-aspirer seulement une portion des gaz brulés permet de ne pas re-compresser une forte quantité de gaz brulés, qui sont très chauds et à très haute pression. Grâce à une telle ré-aspiration de gaz brulés, on évite en outre un piégeage d'air frais dans le cylindre pendant le cycle désactivé.

La fin du cycle désactivé consiste en la re-compression des gaz brulés jusqu'à atteindre le point mort haut 114, puis une ré-expansion du volume de la chambre jusqu'à atteindre le point mort bas 115. Le cycle activé commence alors.

Le cycle activé commence par un phase de réduction du volume de la chambre de combustion, laquelle est ici réalisée à soupapes d'échappement closes tel qu'illustré par le triangle en pointillés 105. La portion de gaz d'échappement ré-aspirés lors du cycle désactivé est toujours présente dans le cylindre et elle subit donc une nouvelle compression à ce stade. Cette re-compression se termine au point mort haut 116. La phase d'expansion suivante débute à soupapes fermées, produisant une détente de la portion des gaz d'échappement piégés dans le cylindre, jusqu'à atteindre un point 116a où la soupape d'admission s'ouvre pour débuter la phase d'ouverture représentée par le triangle 106. Le cylindre atteint le point mort bas 117 puis débute une nouvelle phase de réduction de volume constituant la phase de compression, la soupape d'admission adoptant sa position fermée en un point 117a au cours de cette phase de réduction de volume. La combustion est déclenchée au point mort haut 118. Le cycle activé se termine par une phase de détente avant le début du cycle suivant, ici un cycle désactivé à nouveau.

Dans le présent cas, on conserve lors du cycle désactivé une même quantité de gaz d'échappement dans le cylindre que pour le cycle actif, en respectant un minimum de pression dans le cylindre pendant le cycle désactivé. Un avantage de ce mode de réalisation est que la fraction de gaz brulés maintenus dans le cylindre lors du cycle actif ou fraction de gaz résiduels est moins chaude que dans le cas d'un mode à trois cylindres avec un même calage des soupapes, ce qui permet une meilleure résistance aux cliquetis. Le présent mode de réalisation présente l'avantage de pouvoir être réalisé avec un mécanisme simple d'actionnement des soupapes. Néanmoins le fait de re-compresser deux fois les gaz d'échappement produit une faible pénalité à chaque fois, de l'ordre de 0,07 à 0,1 bars à chaque fois.

Avantageusement, le phasage de l'ouverture de soupape d'admission a lieu après le phasage de la fermeture de la soupape d'échappement ou avant celle-ci mais de manière très proche de manière à éviter d'envoyer des gaz d'échappement dans les conduites d'admission et ainsi provoquer une pénalité sur l'efficacité volumétrique, sur le mélange air-carburant et sa richesse ainsi que de provoquer un encrassement à l'admission.

Le retard à la fermeture de la soupape d'échappement est préférentiellement plus grand que 25 degrés d'angle sur le vilebrequin de manière à ne pas générer de trop faible pression dans le cylindre, afin notamment de ne pas générer de vide pendant le cycle désactivé.

On a représenté sur la figure 5 une suite de cycles alternativement actifs et inactifs d'un même cylindre. Là encore, un triangle en train plein représente une ouverture effective de soupape, tandis qu'un triangle en trait pointillé représente une soupape désactivée, ici maintenue en position fermée. Les triangles 201, 203, 205 et 207 illustrent les mouvements d'ouverture des soupapes d'échappement du cylindre, tandis que les triangles 202, 204, 206 et 208 représentent les mouvements d'ouverture des soupapes d'admission du cylindre. Les traits verticaux représentent les points morts alternativement haut et bas du cylindre. On décrira, en référence à la figure 5 et à la figure 6, d'abord un cycle inactif puis un cycle actif selon le présent mode de réalisation.

Le cycle inactif débute au point mort bas représenté sous la référence 211, lequel point mort bas 211 se produit après la combustion du cycle actif précédent, dont le déclenchement de la combustion est symbolisé par un éclair. A ce moment l'ensemble des soupapes du cylindre est fermé, jusqu'à un point 211a correspondant au début de l'ouverture 203 des soupapes d'échappement, ici au nombre de deux. Entre le point 211 et le point 211a, une première phase de compression est donc ici réalisée avant que les soupapes d'échappement ne soient ouvertes. Au point 211a, une soupape d'échappement est ouverte et la pression dans le cylindre dévient égale à la valeur de la pression dans la conduite d'échappement. L'autre soupape est actionnée en ouverture de manière plus tardive selon une loi de levée différente laquelle sera décrite en référence au cycle actif.

Le cylindre atteint alors son point mort haut sous la référence 212. Entre le point 211a et le point 212, les gaz d'échappement initialement contenus dans le cylindre sont donc expulsés dans la conduite d'échappement.

Le point 212a correspond à l'instant de fermeture des soupapes d'échappement. Le point 212a est ici plus tardif que le point mort haut 212, de sorte qu'entre le point 212 et le point 212a, le cylindre est le siège d'un début de mouvement d'expansion. Une portion des gaz d'échappement est alors ré-aspirée dans le cylindre, puis piégée dans le cylindre au moment illustré par le point 212a où les soupapes d'échappement sont actionnées en fermeture pour marquer la fin du triangle 203. La soupape d'admission est, dans le présent cycle désactivé, maintenue fermée selon le triangle en pointillé 204 de sorte que les gaz d'échappement sont maintenus en enceinte close à partir du point 212a. Entre le point 212a et le point 213 où le cylindre atteint son point mort bas, les gaz d'échappement subissent une expansion.

On s'assure par la ré-aspiration des gaz d'échappement que l'on piège suffisamment de gaz brulés pour ne pas atteindre une pression trop basse au point mort bas 113. A ce titre une pression d'au moins 0,15 bars est avantageuse. Le fait de ré-aspirer seulement une portion des gaz brulés permet de ne pas re-compresser une forte quantité de gaz brulés, qui sont très chauds et à très haute pression. Grâce à une telle ré-aspiration de gaz brulés, on évite en outre un piégeage d'air frais dans le cylindre pendant le cycle désactivé.

La fin du cycle désactivé consiste en la recompression des gaz brulés jusqu'à atteindre le point mort haut 214, puis une ré-expansion du volume de la chambre jusqu'à atteindre le point mort bas 215. Le cycle activé commence alors.

Le cycle activé débute par une ouverture d'une soupape d'échappement laquelle présente une loi de levée différente de celle décrite précédemment. Dans le présent exemple cette loi de levée différente est mise en oeuvre par une soupape différente de celle ayant décrit la première loi de levée décrite en référence au triangle 203 du cycle désactivé, mais en variante cette deuxième loi de levée peut être mise en oeuvre par la même soupape. Dans le présent exemple, la soupape ayant décrit la loi de levée du triangle 203 est maintenue fermée pendant le cycle actif. Si la loi de levée du triangle 203 peut être appliquée à toutes les soupapes d'échappement, alors on autorise l'activation de ces soupapes pendant le cycle actif.

Cette deuxième loi de levée référencée 205 débute au point 215a après une première mise en pression à soupapes fermées. Le point 215a est ici nettement plus tardif que le point 211a d'ouverture de soupape d'échappement de la loi de levée 203, de sorte que la mise en pression des gaz d'échappement piégés est ici particulièrement étendue.

A l'ouverture 215a de la soupape d'échappement la pression dans la chambre augmente à la valeur de la pression dans la conduite d'échappement. Au point 216, le cylindre atteint son point mort haut, alors que la soupape d'échappement reste encore ouverte pendant le début de la phase d'expansion consécutive, de sorte qu'une partie des gaz brulés est ré-aspirée dans le cylindre, jusqu'à un point 216a où la soupape d'échappement est actionnée en fermeture et la soupape d'admission est actionnée en ouverture, avec un croisement de soupapes choisi, le point 216a étant avantageusement positionné au même instant dans le cycle que le point 212a de fermeture de soupape d'échappement de la première loi de levée 203. Grâce à cette seconde loi de levée, on actionne la soupape d'échappement en ouverture lorsque la pression dans le cylindre est proche de la pression dans le collecteur d'échappement, de manière à ne pas générer de pertes par pompage.

Cette seconde loi de levée illustrée par le triangle 205 présente en outre une course de levée réduite ou levée partielle, de sorte que l'expulsion des gaz d'échappement s'effectue de manière progressive et adaptée au cycle actif.

Le point 217 correspond au point mort bas du cylindre, et le point 217a, ultérieur au point 217, à la fermeture de la soupape d'admission. Le point 218 correspond à la commande de combustion, initiée au point mort haut. Le cycle activé se termine par une phase de détente avant le début du cycle suivant, ici un cycle désactivé à nouveau.

Ce mode de distribution permet de choisir une définition optimale des deux lois de levée de manière à assurer un critère de pression minimum dans le cylindre et de minimiser les pertes de pompage pendant le cycle désactivé. En utilisant deux lois de levée différentes on apporte en outre un degré de liberté supplémentaire pour régler la phase d'échappement du cycle activé. Du fait que l'on a plus la même loi de levée selon que l'on se trouve en cycle actif ou en cycle désactivé, lesquelles lois de levée n'ont plus à respecter un compromis entre bonne course d'expansion par une ouverture de soupape d'échappement proche du point mort bas et une rétention de fraction de gaz résiduels par une fermeture de soupape d'échappement tardive pour l'ensemble du champ de fonctionnement du moteur, on peut maintenant optimiser l'ouverture de la soupape d'échappement par la première loi de levée de manière que celle-ci soit au meilleur phasage pour obtenir un travail positif maximal pendant la phase d'expansion et optimiser la fermeture de la soupape d'échappement de la seconde loi de levée de manière à obtenir la meilleure fraction de gaz résiduel lors du cycle actif. Les phases se produisant entre les points 212 et 212a et entre les points 215 et 215a sont avantageusement réglées de manière à définir la première et la deuxième loi de levée.

Cette stratégie de désactivation peut être mise en oeuvre même avec un réglage de distribution ne faisant appel à aucun retard de la fermeture de la soupape d'échappement comme par exemple en phase de démarrage à froid. Une telle stratégie peut permettre jusqu'à 10% de réduction de consommation de carburant supplémentaire sur le gain total prédit sans l'utilisation de la désactivation de cylindre avec le moteur froid par rapport aux stratégies précédentes, qui ne permettent pas son utilisation avec le moteur froid.

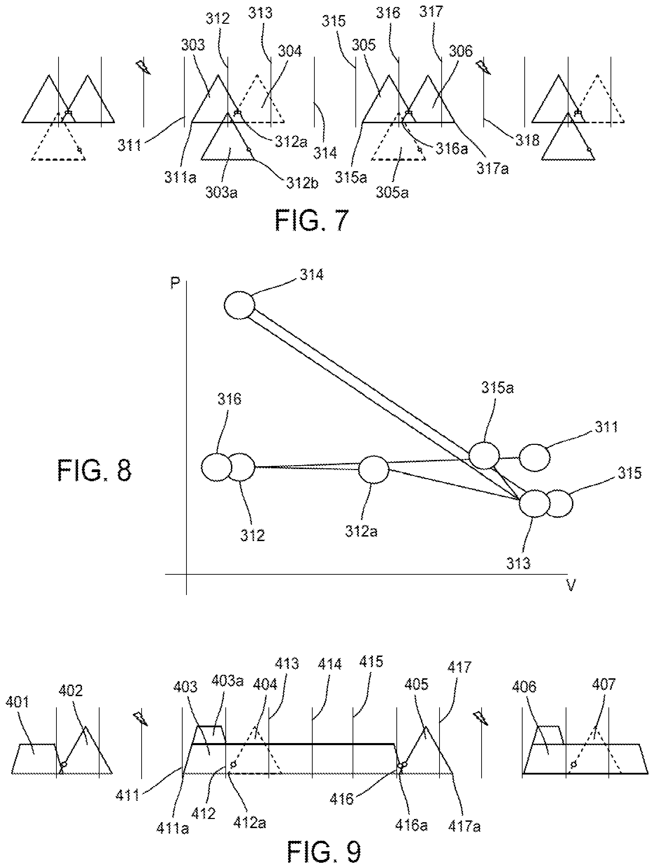

On a représenté sur les figures 7 et 8 un quatrième mode de réalisation de l'invention. Sur la figure 7, le cycle inactif débute au point mort bas représenté sous la référence 311, lequel point mort bas 311 se produit après la combustion du cycle actif précédent, dont le déclenchement de la combustion est symbolisé par un éclair. A ce moment l'ensemble des soupapes du cylindre est fermé, jusqu'à un point 311a correspondant au début de l'ouverture 303 d'une première soupape d'échappement. Le présent cylindre comporte deux soupapes d'échappement et la deuxième soupape d'échappement décrit une ouverture représentée sous la forme d'un triangle 303 a lequel est légèrement retardé par rapport à l'ouverture de la première soupape. Entre le point 311 et le point 311a, une première phase de compression est donc ici réalisée avant que la première soupape d'échappement ne soit ouverte. Au point 311a, la soupape d'échappement est ouverte et la pression dans le cylindre dévient égale à la valeur de la pression dans la conduite d'échappement.

Le cylindre atteint alors son point mort haut sous la référence 312. Entre le point 311a et le point 312, les gaz d'échappement initialement contenus dans le cylindre sont donc expulsés dans la conduite d'échappement par la première et la deuxième soupape.

Le point 312a correspond à l'instant de fermeture de la première soupape d'échappement et le point 312b correspond à la fermeture de la seconde soupape d'échappement. Le point 312a de fermeture de la première soupape d'échappement est avantageusement positionné à proximité du point mort haut 312. Les points 312a et 312b sont néanmoins ici plus tardifs que le point mort haut 312, de sorte qu'entre le point 312 et les points 312a et 312b, le cylindre est le siège d'un début de mouvement d'expansion. Une portion des gaz d'échappement est alors ré-aspirée dans le cylindre, puis piégée dans le cylindre au moment illustré par le point 312b où la seconde soupape d'échappement est actionnée en fermeture pour marquer la fin du triangle 303a. La soupape d'admission est, dans le présent cycle désactivé, maintenue fermée selon le triangle en pointillé 304 de sorte que les gaz d'échappement sont maintenus en enceinte close à partir du point 312b. En variante, la soupape d'admission peut être ouverte avec une loi de levée plus restreinte en course ou en durée que la loi de levée ayant lieu pendant la phase active. Entre le point 312b et le point 313 où le cylindre atteint son point mort bas, les gaz d'échappement subissent une expansion. On s'assure par la ré-aspiration des gaz d'échappement que l'on piège suffisamment de gaz brulés pour ne pas atteindre une pression trop basse au point mort bas 313. A ce titre une pression d'au moins 0,15 bars est avantageuse. Le fait de ré-aspirer seulement une portion des gaz brulés permet en outre de ne pas re-compresser une forte quantité de gaz brulés, qui sont très chauds et à très haute pression.

La fin du cycle désactivé consiste en la re-compression des gaz brulés jusqu'à atteindre le point mort haut 314, puis une ré-expansion du volume de la chambre jusqu'à atteindre le point mort bas 315. Le cycle activé commence alors.

Le cycle activé commence par une phase de réduction du volume de la chambre de combustion, laquelle est ici réalisée avec une seule des deux soupapes d'échappement ouverte, ici la première soupape d'échappement tel qu'illustré par le triangle en trait plein 305, alors que la seconde soupape d'échappement est désactivée et reste fermée tel qu'illustré par le triangle en trait pointillé 305a.

Plus spécifiquement, au point mort bas 315 la portion de gaz d'échappement ré-aspirés lors du cycle inactif est toujours présente dans le cylindre et elle subit donc un début de compression. A point 315a d'ouverture de la première soupape d'échappement la pression dans le cylindre augmente à la pression dans le collecteur d'échappement jusqu'au point mort haut 316, engendrant alors une légère perte par pompage. La phase d'expansion suivante débute alors que la première soupape d'échappement est toujours ouverte, de sorte qu'une ré-aspiration de gaz d'échappement prend place dans le cylindre jusqu'à atteindre un point 316a où la soupape d'admission s'ouvre pour débuter la phase d'ouverture représentée par le triangle 306. Le cylindre atteint le point mort bas 317 puis débute une nouvelle phase de réduction de volume constituant la phase de compression, la soupape d'admission adoptant sa position fermée en un point 317a au cours de cette phase de réduction de volume. La combustion est déclenchée au point mort haut 318. Le cycle activé se termine par une phase de détente avant le début du cycle suivant, ici un cycle désactivé à nouveau.

Dans le présent cas, on conserve lors des cycles activé et désactivé une portion des gaz d'échappement dans le cylindre, en respectant un minimum de pression dans le cylindre pendant le cycle désactivé.

Ce mode de réalisation est particulièrement avantageux lorsque le réglage du moteur en cycle actif à faible régime et à faible charge permet d'adopter une fermeture de soupape d'échappement tardive. Si la position de la fermeture de la soupape d'échappement n'est pas très tardive, c'est à dire pour une fermeture de soupape inférieure à 25 degrés d'angle sur le vilebrequin, on produit du vide dans la chambre de combustion pendant la phase d'expansion s'étendant du point 312a au point 313.

Ce mode de réalisation confère là encore une grande liberté de réglage des ouvertures des soupapes d'échappement ainsi que des fermetures des soupapes d'échappement. Ce mode de réalisation est particulièrement intéressant dans le cas de moteurs déjà équipés de systèmes de cames concentriques ou cam-in-cam en anglais pour came dans la came, applicables aux moteurs turbo-chargés. De tels systèmes permettent en effet de caler en phase chaque soupape d'échappement dans une position différente, ou encore de modifier la largeur d'ouverture de soupape d'au moins une soupape échappement. Les lois 303 et 305, ici une même loi pour une même soupape, ne sont pas nécessairement égales aux lois 303a et 305a, elles peuvent différer en levée maximale et largeur totale d'ouverture de soupape.

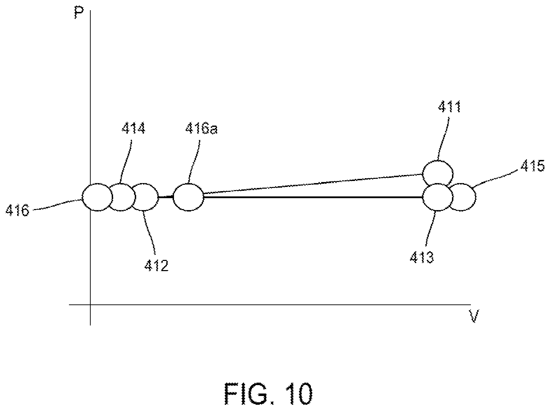

On a représenté sur les figures 9 et 10 un cinquième mode de réalisation de l'invention. Sur la figure 9, le cycle inactif débute au point mort bas représenté sous la référence 411, lequel point mort bas 411 se produit après la combustion du cycle actif précédent, dont le déclenchement de la combustion est symbolisé par un éclair. A ce moment l'ensemble des soupapes du cylindre est fermé, jusqu'à un point 411a correspondant au début de l'ouverture 403 d'une première soupape d'échappement. Le présent cylindre comporte deux soupapes d'échappement et la deuxième soupape d'échappement décrit une ouverture représentée sous la forme d'un triangle 403a lequel présente une course d'ouverture plus grande que l'ouverture 403 de la première soupape. Au point 411a, les soupapes d'échappement sont ouvertes et la pression dans le cylindre dévient égale à la valeur de la pression dans la conduite d'échappement.

Le cylindre atteint alors son point mort haut sous la référence 412. Entre le point 411a et le point 412, les gaz d'échappement initialement contenus dans le cylindre sont donc expulsés dans les conduites d'échappement par la première et la deuxième soupape.

Le point 412a correspond à l'instant de fermeture de la seconde soupape d'échappement dont le mouvement est représenté par le triangle 403a. La première soupape est néanmoins maintenue ouverte jusqu'à englober la phase d'échappement du cycle actif suivant. Ainsi, le cylindre est d'abord le siège d'un mouvement d'expansion entre le point mort haut 412 et le point mort bas 413, alors que la soupape d'admission est désactivée tel qu'illustré par le triangle en trait pointillé 404. Les gaz d'échappement sont alors ré-aspirés dans le cylindre. Le cylindre atteint ensuite son point mort haut 414 correspondant normalement à la phase de compression, mais correspondant ici à une nouvelle expulsion des gaz d'échappement hors du cylindre. La soupape d'admission est, dans le présent cycle désactivé, maintenue fermée de sorte que les gaz d'échappement ne transitent que par la soupape d'échappement maintenue ouverte. On notera que la soupape d'échappement est avantageusement maintenue dans une position d'ouverture partielle de manière à éviter un contact de la soupape avec le piston dans la position de point mort haut.

La phase d'expansion suivante débute alors que la première soupape d'échappement est toujours ouverte, de sorte qu'une ré-aspiration de gaz d'échappement prend place dans le cylindre jusqu'à atteindre le point mort bas 415 où débute le cycle actif.

Le cycle actif débute par une phase d'échappement laquelle consiste à expulser à nouveau les gaz d'échappement alors que la première soupape d'échappement est toujours ouverte. La seconde soupape d'échappement est maintenue en position fermée pendant cette phase d'échappement. Après le point mort haut 416 la première soupape d'échappement est fermée au point 416a de sorte qu'une portion de gaz d'échappement est ré-aspirée par le cylindre. La soupape d'admission s'ouvre alors pour débuter la phase d'ouverture représentée par le triangle 405. Le cylindre atteint le point mort bas 417 puis débute une nouvelle phase de réduction de volume constituant la phase de compression, la soupape d'admission adoptant sa position fermée en un point 417a au cours de cette phase de réduction de volume. La combustion est déclenchée au point mort haut 418. Le cycle activé se termine par une phase de détente avant le début du cycle suivant, ici un cycle désactivé à nouveau.

Dans ce mode de réalisation, le cylindre reste donc en liaison gazeuse avec le collecteur d'échappement depuis le début du cycle désactivé jusqu'à la fin de la phase d'échappement du cycle actif.

Le pilotage des soupapes pour mettre en oeuvre ces différents modes de réalisation peut être électrique, électropneumatique, hydraulique ou purement mécanique. Ainsi un dispositif de modification de comportement de soupape peut, de manière connue en soi, être réalisé sous la forme de soupapes actionnées de manière électrique, hydraulique ou électromagnétique sous la commande d'un processeur tel que le module de contrôle moteur. Les soupapes peuvent en variante être des soupapes à linguet, à butée ou à poussoir dés-activables par ouverture d'un canal hydraulique de commande. En variante encore les soupapes peuvent être commandées par une pluralité d'arbres à cames dont on utilise sélectivement l'une ou l'autre des cames selon que l'on souhaite désactiver ou non une soupape.

Le tableau 1 ci-dessous synthétise le mode de fonctionnement d'un moteur à trois cylindres avec désactivation tournante, par comparaison avec un mode de fonctionnement conventionnel. On voit qu'avec un mode de désactivation tournante, on réduit d'un facteur 2 l'apport de puissance fourni vers le vilebrequin moteur par les cylindres, dans le cas où le nombre de cylindres dans le moteur est un multiple de 3 (3 ou 6 cylindres par exemple). Tous les trois cylindres subissent la désactivation des cylindres, c'est-à-dire la désactivation de leurs soupapes). Le système de l'invention de « boucle d'air tournant» consiste à alterner de façon périodique deux cycles moteurs (cycle A actif, cycle B désactivé) pour tous les cylindres du moteur.

**Tableau 1**

| | | | | | | |
|---|---|---|---|---|---|---|
| ordre de combustion des 3 cylindres | 1 | 3 | 2 | 1 | 3 | 2 |
| mode à 3 cylindres conventionnel 1 = cylindre activé | 1 | 1 | 1 | 1 | 1 | 1 |
| mode à 3 cylindres avec désactivation tournante 1 = cylindre activé 0 = cylindre désactivé | 1 | 0 | 1 | 0 | 1 | 0 |

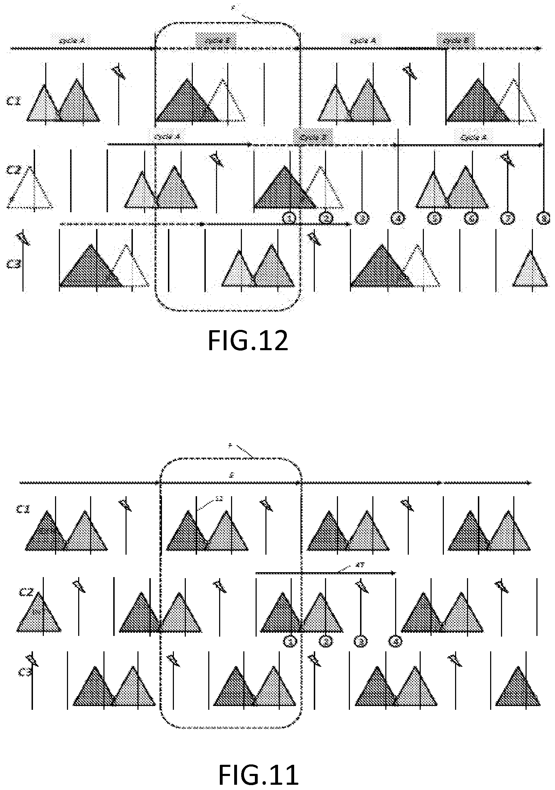

La figure 11 représente l'état des trois cylindres C1, C2 et C3 d'un moteur trois cylindres fonctionnant de façon conventionnelle (sans désactivation), avec les mêmes conventions de représentation que les figures précédentes 1,3,5,7,9. La fenêtre d'analyse F, représentée à la figure par un encadré, est choisie sur quatre temps, pour la comparer par la suite à la fenêtre correspondante en désactivation tournante (figure 12). Si on étude cette fenêtre F :
- on constate que tous les cylindres C1,C2 et C3 réalisent un même cycle moteur à quatre temps (cycle noté S à la figure),
- on constate également que le phasage temporel de ce cycle moteur S est différent pour chaque cylindre, du fait qu'on a un nombre impair de cylindres, on a une combustion à chaque rotation à 240° du vilebrequin).

La figure 12 représente l'état des trois mêmes cylindres C1,C2,C3 quand on fait fonctionner, selon l'invention, le moteur en désactivation tournante. Si on analyse l'état des cylindres sur la fenêtre F, également représentée par un encadré, on constate que
- tous les cylindres réalisent un type différent de cycles moteur 4 temps (un cycle noté A à la figure signifie un cycle où le cylindre est actif, un cycle noté B à la figure signifie un cycle où le cylindre est désactivé). Ainsi, le cylindre C1 a majoritairement des cycles de type B, le cylindre C2 subit une fin de cycle A et un début de cycle B (proportion 1/3 cycle A pour 2/3 cycle B), et le cylindre C3 subit une fin de cycle B et un début de cycle A (proportion 1/3 de cycle B pour 2/3 de cycle A).
- on a une répétition d'un même cycle (A ou B) à chaque 8 temps du moteur,
- on a une succession continue des cycles A et B,
- le phasage temporel de ces cycles moteurs est différent pour chaque cylindre (en désactivation tournante avec un moteur à 3 cylindres, on a une combustion à chaque rotation à 480° du vilebrequin).

## Revendications

1. Moteur à combustion de véhicule automobile comprenant un jeu de cylindres formant chambres de combustion en désactivation tournante, telle que, alternativement, chaque cylindre est désactivé, et un jeu de soupapes (1,2,3,101,102,103,...) associées respectivement à ces cylindres, le moteur comportant un dispositif de modification de comportement des soupapes, le dispositif de modification de comportement des soupapes étant configuré pour commander pour au moins un cylindre deux cycles respectivement activé et désactivé du cylindre, lesquels cycles comportent chacun une phase initiale (12,112,212,312,412, 16,116,216,316,416) laquelle consiste en une réduction de volume de la chambre laquelle phase initiale (12,112,212,312,412) met en oeuvre dans le cas du cycle désactivé un échappement effectif de gaz hors du cylindre par au moins une soupape d'échappement, lesquels cycles activé et désactivé comportent après la phase initiale de réduction de volume une suite de trois phases consistant successivement en une phase d'expansion de volume (13,113,213,313,413,17,117,217,317,417) de la chambre de combustion, une seconde phase de réduction de volume (14,114,214,314,414,18,118,218,318,418) de la chambre puis une seconde phase d'expansion de volume (15,115,215,315,415) de la chambre, **caractérisé en ce qu'**en cycle désactivé au moins une soupape d'échappement du cylindre reste ouverte au-delà de la fin de la phase initiale de réduction de volume de la chambre (12,112,212,312,412) et pendant une partie de la phase d'expansion consécutive (13,113,213,413) de sorte que ladite phase d'expansion consécutive produit une aspiration de gaz d'échappement dans le cylindre par la soupape d'échappement.

2. Moteur à combustion selon la revendication 1, **caractérisé en ce que** le dispositif de modification de comportement des soupapes est configuré de sorte que la phase d'expansion (17,117,217,317,417) consécutive à la phase initiale de réduction de volume (16,116,216,316,416) est réalisée avec au moins une soupape d'admission ouverte pendant au moins une partie de la phase d'expansion (17,117,217,317,417) en cycle activé et la phase d'expansion (13,113,213,313,413) consécutive à la phase initiale de réduction de volume (12,112,212,312,412) est réalisée avec toutes les soupapes d'admission du cylindre maintenues fermées pendant l'ensemble de la phase d'expansion en cycle désactivé.

3. Moteur à combustion selon la revendication 1 ou la revendication 2, **caractérisé en ce que** le dispositif de modification de comportement des soupapes est configuré de sorte que ladite seconde phase de réduction de volume en cycle désactivé (14,114,214,314,414) est une phase de réduction de volume qui comprime les gaz d'échappement ré-aspirés.

4. Moteur à combustion selon l'une quelconque des revendications précédentes, **caractérisé en ce que** le comportement de l'ensemble des soupapes d'échappement (1,3,5,101,103,105,...) du cylindre est identique pour un cycle activé et un cycle désactivé.

5. Moteur à combustion selon l'une quelconque des revendications 1 à 3, **caractérisé en ce qu'**en cycle activé toutes les soupapes d'échappement (101,103,105,...) sont fermées pendant la phase initiale de réduction de volume (105) du cylindre.

6. Moteur à combustion selon l'une quelconque des revendications 1 à 3, **caractérisé en ce que** la phase initiale de réduction de volume (12,112,212,312,412, 16,116,216,316,416) met en oeuvre dans le cas du cycle activé un échappement effectif de gaz hors du cylindre par au moins une soupape d'échappement (203,205,303,303a,305) et le dispositif de modification de comportement de soupapes est configuré pour qu'au moins une soupape d'échappement dudit au moins un cylindre présente une cinétique différente pendant la phase initiale de réduction de volume selon que le cylindre est en cycle activé ou en cycle désactivé (203,205,303,303a,305,305a,403,403a).

7. Moteur à combustion selon la revendication précédente, **caractérisé en ce que** le dispositif de modification de comportement de soupapes est configuré de telle sorte que dans la phase initiale de réduction de volume (212,312,412,216,316,416) une ouverture globale considérée sur l'ensemble des soupapes d'échappement du cylindre est plus faible en cycle activé qu'en cycle désactivé.

8. Moteur à combustion selon la revendication 6 ou la revendication 7, **caractérisé en ce que** le dispositif de modification de comportement de soupapes est configuré de telle sorte que dans la phase initiale de réduction de volume (212, 216) une soupape d'échappement du cylindre présente une course d'ouverture (203,205) qui est plus faible en cycle activé qu'en cycle désactivé.

9. Moteur à combustion selon l'une quelconque des revendications 6 à 8, **caractérisé en ce que** ledit au moins un cylindre comporte au moins deux soupapes d'échappement (203,205,303,303a,305,305a,403,403a), le dispositif de modification de comportement de soupapes est configuré pour placer au moins une desdites soupapes d'échappement, notamment au moins deux soupapes d'échappement (203,205,303,303a,305,305a,403,403a) en position ouverte pendant au moins une partie de la phase initiale de réduction de volume en cycle désactivé (212,312,412) et maintenir au moins une soupape fermée parmi au moins une desdites soupapes, notamment parmi au moins deux desdites soupapes, pendant la phase initiale de réduction de volume en cycle activé (216,316,416).

10. Moteur à combustion selon l'une quelconque des revendications 6 à 8, **caractérisé en ce que** le dispositif de modification de comportement de soupapes est configuré pour actionner en ouverture ladite au moins une soupape d'échappement (403) en début de phase initiale de réduction de volume (412) dans le cas du cycle désactivé et pour maintenir cette soupape d'échappement ouverte (403) pendant les phases successives d'expansion (413), de réduction (414) et d'expansion (415) de volume du cycle désactivé.

11. Moteur à combustion selon l'une quelconque des revendications précédentes, **caractérisé en ce que** le dispositif de modification de comportement de soupapes est configuré de telle sorte que ledit au moins un cylindre effectue alternativement un cycle activé (16,116,216,316,416) et un cycle désactivé (12,112,212,312,412).

12. Moteur à combustion selon l'une quelconque des revendications précédentes, **caractérisé en ce qu'**il comporte trois cylindres (C1 ,C2,C3).

13. Moteur à combustion selon la revendication précédente, **caractérisé en ce que**, sur une période d'analyse sur quatre temps, tous les cylindres (C1,C2,C3) réalisent un type différent de cycle moteur, les types étant le cycle moteur (A) actif et (B) désactivé.

14. Moteur à combustion selon la revendication 12 ou 13, **caractérisé en ce qu'**on répète le même cycle, de type (A) activé ou (B) désactivé, tous les 8 temps du moteur.

15. Moteur à combustion selon l'une des revendications 12 à 14, **caractérisé en ce que** le phasage temporel des cycles moteur (A) activé ou (B) désactivé est différent pour chaque cylindre (C1 ,C2,C3).

## Patentansprüche

1. Kraftfahrzeug-Verbrennungsmotor, der einen Satz von Zylindern umfasst, die Verbrennungskammern mit turnusmäßigem Abschalten derart umfassen, dass jeder Zylinder alternativ deaktiviert wird, und einen Satz von Ventilen (1, 2, 3, 101, 102, 103, ...), die jeweils mit diesen Zylindern assoziiert sind, wobei der Motor eine Verhaltensänderungsvorrichtung der Ventile umfasst, wobei die Verhaltensänderungsvorrichtung der Ventile konfiguriert ist, um für mindestens einen Zylinder zwei Zyklen des Zylinders jeweils aktiviert und deaktiviert zu steuern, wobei die Zyklen jeweils eine Anfangsphase (12, 112, 212, 312, 412, 16, 116, 216, 316, 416) umfassen, die aus einer Innenraumverringerung der Kammer besteht, wobei die Anfangsphase (12, 112, 212, 312, 412) in dem Fall des deaktivierten Zylinders ein effektives Auslassen von Gasen aus dem Zylinder durch mindestens ein Auslassventil umsetzt, wobei der aktivierte und deaktivierte Zyklus nach der anfänglichen Innenraumverringerungsphase eine Folge von drei Phasen umfassen, die sukzessive in einer Innenraumexpansionsphase (13, 113, 213, 313, 413, 17, 117, 217, 317, 417) der Verbrennungskammer, einer zweiten Innenraumverringerungsphase (14, 114, 214, 314, 414, 18, 118, 218, 318, 418) der Kammer und dann einer zweiten Innenraumexpansionsphase (15, 115, 215, 315, 415) der Kammer bestehen, **dadurch gekennzeichnet, dass** im deaktivierten Zyklus mindestens ein Auslassventil des Zylinders über das Ende der anfänglichen Innenraumverringerungsphase der Kammer (12, 112, 212, 312, 412) und während eines Teils der sukzessiven Expansionsphase (13, 113, 213, 413) derart offen bleibt, dass die sukzessive Expansionsphase eine Abgasansaugung in den Zylinder durch das Auslassventil erzeugt.

2. Verbrennungsmotor nach Anspruch 1, **dadurch gekennzeichnet, dass** die Verhaltensänderungsvorrichtung der Ventile derart konfiguriert ist, dass die Expansionsphase (17, 117, 217, 317, 417) im Anschluss an die anfängliche Innenraumverringerungsphase (16, 116, 216, 316, 416) mit mindestens einem Einlassventil, das während mindestens eines Teils der Expansionsphase (17, 117, 217, 317, 417) im aktivierten Zyklus und der Expansionsphase (13, 113, 213, 313, 413) im Anschluss an die anfängliche Innenraumverringerung (12, 112, 212, 312, 412) offen ist, mit allen Einlassventilen des Zylinders, die während der gesamten Expansionsphase im deaktivierten Zyklus geschlossen gehalten werden, ausgeführt wird.

3. Verbrennungsmotor nach Anspruch 1 oder Anspruch 2, **dadurch gekennzeichnet, dass** die Verhaltensänderungsvorrichtung der Ventile derart konfiguriert ist, dass die zweite Innenraumverringerungsphase im deaktivierten Zyklus (14, 114, 214, 314, 414) eine Innenraumverringerungsphase ist, die die neu angesaugten Abgase komprimiert.

4. Verbrennungsmotor nach einem der vorstehenden Ansprüche, **dadurch gekennzeichnet, dass** das Verhalten aller Auslassventile (1, 3, 5, 101, 103, 105,...) des Zylinders für einen aktivierten und einen deaktivierten Zylinder identisch ist.

5. Verbrennungsmotor nach einem der Ansprüche 1 bis 3, **dadurch gekennzeichnet, dass** beim aktivierten Zyklus alle Auslassventile (101, 103, 105, ...) während der anfänglichen Innenraumverringerungsphase (105) des Zylinders geschlossen sind.

6. Verbrennungsmotor nach einem der Ansprüche 1 bis 3, **dadurch gekennzeichnet, dass** die anfängliche Innenraumverringerungsphase (12, 112, 212, 312, 412, 16, 116, 216, 316, 416) in dem Fall des aktivierten Zyklus ein effektives Auslassen von Gasen aus dem Zylinder durch mindestens ein Auslassventil (203, 205, 303, 303a, 305) umsetzt, und die Verhaltensänderungsvorrichtung von Ventilen konfiguriert ist, damit mindestens ein Auslassventil des mindestens einen Zylinders eine unterschiedliche Kinetik während der anfänglichen Innenraumverringerungsphase je nachdem aufweist, ob der Zylinder im aktivierten Zyklus oder im deaktivierten Zyklus (203, 205, 303, 303a, 305, 305a, 403, 403a) ist.

7. Verbrennungsmotor nach dem vorstehenden Anspruch, **dadurch gekennzeichnet, dass** die Verhaltensänderungsvorrichtung von Ventilen derart konfiguriert ist, dass in der anfänglichen Innenraumverringerungsphase (212, 312, 412, 216, 316, 416) eine globale Öffnung, die auf sämtlichen Auslassventilen des Zylinders betrachtet wird, im aktivierten Zyklus geringer ist als im deaktivierten Zyklus.

8. Verbrennungsmotor nach Anspruch 6 oder Anspruch 7, **dadurch gekennzeichnet, dass** die Verhaltensänderungsvorrichtung von Ventilen derart konfiguriert ist, dass in der anfänglichen Innenraumverringerungsphase (212, 216) ein Auslassventil des Zylinders einen Öffnungshub (203, 205) aufweist, der im aktivierten Zyklus geringer ist als im deaktivierten Zyklus.

9. Verbrennungsmotor nach einem der Ansprüche 6 bis 8, **dadurch gekennzeichnet, dass** der mindestens eine Zylinder mindestens zwei Auslassventile (203, 205, 303, 303a, 305, 305a, 403, 403a) umfasst, wobei die Verhaltensänderungsvorrichtung von Ventilen konfiguriert ist, um mindestens eines der Auslassventile, insbesondere mindestens zwei Auslassventile (203, 205, 303, 303a, 305, 305a, 403, 403a) während mindestens eines Teils der anfänglichen Innenraumverringerungsphase im deaktivierten Zyklus (212, 312, 412) in offene Position zu platzieren, und mindestens ein Ventil des mindestens einen der Ventile, insbesondere von mindestens zwei der Ventile, während der anfänglichen Innenraumverringerungsphase im aktivierten Zyklus (216, 316, 416) geschlossen zu halten.

10. Verbrennungsmotor nach einem der Ansprüche 6 bis 8, **dadurch gekennzeichnet, dass** die Verhaltensänderungsvorrichtung von Ventilen konfiguriert ist, um das mindestens eine Auslassventil (403) zu Beginn der anfänglichen Innenraumverringerungsphase (412) in dem Fall des deaktivierten Zyklus zum Öffnen zu betätigen, und um dieses Auslassventil (403) während der sukzessiven Innenraumexpansions- (413), Verringerungs- (414) und Expansionsphase (415) des deaktivierten Zyklus offen zu halten.

11. Verbrennungsmotor nach einem der vorstehenden Ansprüche, **dadurch gekennzeichnet, dass** die Verhaltensänderungsvorrichtung von Ventilen derart konfiguriert ist, dass mindestens ein Zylinder abwechselnd einen aktivierten Zyklus (16, 116, 216, 316, 416) und einen deaktivierten Zyklus (12, 112, 212, 312, 412) ausführt.

12. Verbrennungsmotor nach einem der vorstehenden Ansprüche, **dadurch gekennzeichnet, dass** er drei Zylinder (C1, C2, C3) umfasst.

13. Verbrennungsmotor nach dem vorstehenden Anspruch, **dadurch gekennzeichnet, dass** während einer Analyseperiode über vier Takte alle Zylinder (C1, C2, C3) einen unterschiedlichen Motortakt ausführen, wobei die Typen der aktive (A) und deaktivierte Motorzyklus (B) sind.

14. Verbrennungsmotor nach Anspruch 12 oder 13, **dadurch gekennzeichnet, dass** man denselben Zyklus vom aktivierten (A) oder deaktivierten Typ (B) alle 8 Takte des Motors wiederholt.

15. Verbrennungsmotor nach einem der Ansprüche 12 bis 14, **dadurch gekennzeichnet, dass** die zeitliche Phasenordnung der aktivierten (A) oder deaktivierten (B) Motorzyklen für jeden Zylinder (C1, C2, C3) unterschiedlich ist.

## Claims

1. A motor vehicle combustion engine including a set of cylinders forming combustion chambers in rotating deactivation, such that, alternately, each cylinder is deactivated, and a set of valves (1, 2, 3, 101, 102, 103, ...) associated respectively with these cylinders, the engine comprising a device for modification of the behaviour of the valves, the valve behaviour modification device being configured to control for at least one cylinder two cycles, respectively activated and deactivated, of the cylinder, which cycles each comprise a intial phase (12, 112, 212, 312, 412, 16, 116, 216, 316, 416) which consists of a reduction of volume of the chamber, which initial phase (12, 112, 212, 312, 412) implements in the case of the deactivated cycle an effective exhaust of gas outside the cylinder by at least one exhaust valve, which activated and deactivated cycles comprise, after the initial phase of volume reduction, a series of three phases consisting successively of a volume expansion phase (13, 113, 213, 313, 413, 17, 117, 217, 317, 417) of the combustion chamber, a second phase of volume reduction (14, 114, 214, 314, 414, 18, 118, 218, 318, 418) of the chamber then a second volume expansion phase (15, 115, 215, 315, 415) of the chamber, **characterized in that** in deactivated cycle at least one exhaust valve of the cylinder remains open beyond the end of the initial volume reduction phase of the chamber (12, 112, 212, 312, 412) and during a portion of the consecutive expansion phase (13, 113, 213, 413) such that said consecutive expansion phase produces an aspiration of exhaust gas in the cylinder by the exhaust valve.

2. The combustion engine according to claim 1, **characterized in that** the device for modification of the behaviour of the valves is configured such that the expansion phase (17, 117, 217, 317, 417) consecutive to the initial volume reduction phase (16, 116, 216, 316, 416) is realized with at least one open intake valve during at least a portion of the expansion phase (17, 117, 217, 317, 417) in activated cycle and the expansion phase (13, 113, 213, 313, 413) consecutive to the initial volume reduction phase (12, 112, 212, 312, 412) is realized with all the intake valves of the cylinder kept closed during the whole of the expansion phase in deactivated cycle.

3. The combustion engine according to claim 1 or claim 2, **characterized in that** the device for modification of the behaviour of the valves is configured such that said second volume reduction phase in deactivated cycle (14, 114, 214, 314, 414) is a volume reduction phase which compresses the re-aspirated exhaust gases.

4. The combustion engine according to any one of the preceding claims, **characterized in that** the behaviour of the whole of the exhaust valves (1, 3, 5, 101, 103, 105, ...) of the cylinder is identical for an activated cycle and a deactivated cycle.

5. The combustion engine according to any one of claims 1 to 3, **characterized in that** in activated cycle all the exhaust valves (101, 103, 105, ...) are closed during the initial volume reduction phase (105) of the cylinder.

6. The combustion engine according to any one of claims 1 to 3, **characterized in that** the initial volume reduction phase (12, 112, 212, 312, 412, 16, 116, 216, 316, 416) implements in the case of the activated cycle an effective exhaust of gas outside the cylinder by at least one exhaust valve (203, 205, 303, 303a, 305) and the device for modification of the behaviour of valves is configured so that at least one exhaust valve of said at least one cylinder presents different kinetics during the initial volume reduction phase depending on whether the cylinder is in activated cycle or in deactivated cycle (203, 205, 303, 303a, 305, 305a, 403, 403a).

7. The combustion engine according to the preceding claim, **characterized in that** the device for modification of the behaviour of the valves is configured such that in the initial volume reduction phase (212, 312, 412, 216, 316, 416) an overall opening considered over the whole of the exhaust valves of the cylinder is smaller in activated cycle than in deactivated cycle.

8. The combustion engine according to claim 6 or claim 7, **characterized in that** the device for modification of the behaviour of valves is configured such that in the initial volume reduction phase (212, 216) an exhaust valve of the cylinder presents an opening course (203, 205) which is smaller in activated cycle than in deactivated cycle.

9. The combustion engine according to any one of claims 6 to 8, **characterized in that** at least one cylinder comprises at least two exhaust valves (203, 205, 303, 303a, 305, 305a, 403, 403a), the device for modification of the behaviour of valves is configured to place at least one of said exhaust valves, in particular at least two exhaust valves (302, 205, 303, 303a, 305, 305a, 403, 403a) in open position during at least a portion of the initial volume reduction phase in deactivated cycle (212, 312, 412) and to keep at least one valve closed from among at least one of said valves, in particular from at least two of said valves, during the initial volume reduction phase in activated cycle (216, 316, 416).

10. The combustion engine according to any one of claims 6 to 8, **characterized in that** the device for modification of the behaviour of valves is configured to actuate for opening said at least one exhaust valve (403) at the start of the initial volume reduction phase (412) in the case of the deactivated cycle and for keeping this exhaust valve open (403) during the successive phases of expansion (413), reduction (414) and expansion (415) of volume of the deactivated cycle.

11. The combustion engine according to any one of the preceding claims, **characterized in that** the device for modification of the behaviour of valves is configured such that said at least one cylinder carries out alternately an activated cycle (16, 116, 216, 316, 416) and a deactivated cycle (12, 112, 212, 312, 412).

12. The combustion engine according to any one of the preceding claims, **characterized in that** it comprises three cylinders (C1, C2, C3).

13. The combustion engine according to the preceding claim, **characterized in that**, over an analysis period over four strokes, all the cylinders (C1, C2, C3) realize a different engine cycle type, the types being the active (A) and (B) deactivated engine cycle.

14. The combustion engine according to claim 12 or 13, **characterized in that** the same cycle, of activated (A) or deactivated (B) type, is repeated all the 8 strokes of the engine.

15. The combustion engine according to one of claims 12 to 14, **characterized in that** the time phasing of the activated (A) or deactivated (B) engine cycles is different for each cylinder (C1, C2, C3).
